# EUROPÄISCHE PATENTANMELDUNG

(11) **EP 1 336 366 A1**
(43) Veröffentlichungstag der Anmeldung: **20.08.2003**
(21) Anmeldenummer: 02090062.7
(22) Anmeldetag: 19.02.2002
(51) Int. Cl.: A47J 37/07

(54) **Grill - Pavillon**

(71) Anmelder: Neumann, Roland, 53572 Unkel (DE)
(72) Erfinder: Neumann, Roland, 53572 Unkel (DE)

(57) **Zusammenfassung**

Der Grill-Pavillon ist eine pilzförmig gestaltete Konstruktion, die aus einer Mittelsäule **(*3*)**, einem an dieser Mittelsäule befestigten Schirmdach **(*4*)** und eine an der Mittelsäule befestigten runden Tischplatte **(*5*)** besteht.

Das Schirmdach **(4)** ist eine aus mindestens zwölf Dachsegmenten **(*16*)** mit mindestens zwölf Dachträgern **(*6*)** und mindestens zwölf Dachblechen **(*15*)** bestehende Einheit, die von der Mittelsäule ***(3)*** sicher getragen wird.

Die runde Tischplatte ***(5)*** umgibt kreisringförmig die Mittelsäule ***(3)*** und ist auf den von der Mittelsäule sich verzweigenden Rohrrahmen **(*28*)** fixiert.

Im Innenraum der Mittelsäule **(*3*)** , die aus drei Einzelstützen **(*10*)** gebildet wird, sind in Höhe der Tischplatte **(*5*)** ein Holzkohlegrill **(7)** und ein darüber befindlicher Rauchabzug **(8)** angeordnet.

## Beschreibung

Die Erfindung betrifft einen Grill-Pavillon mit einer aus mindestens drei Einzelstützen bestehenden Mittelsäule, mit einem an dieser Mittelsäule befestigtem Schirmdach, sowie einer an der Mittelsäule befestigten runden Tischplatte.
Im Innenraum der durch die mindestens drei Einzelstützen gebildeten Mittelsäule befinden sich in Höhe der Tischplatte ein runder Holzkohlengrill und ein darüber befestigter höhenverstellbarer Rauchabzug.
Bei Gartenfesten ist öfter der Wunsch nach mehr Gemütlichkeit, Atmosphäre und Stil vorhanden. So sind Fragen wie:
" ...wo können die Gäste sitzen, wo kann der Grill aufgestellt werden, stört der Qualm und was ist, wenn es regnet und kalt wird? " keine Seltenheit.
Es ist daher Ziel der Erfindung, auf diese Fragen eine Antwort zu geben und diese Aufgabe mit Hilfe eines Grill-Pavillons mit den Merkmalen des Anspruchs 1 zu lösen.

Die erfindungsgemäße Konstruktion vereint die guten Eigenschaften eines Pavillons mit den Vorzügen eines Holzkohlegrills. So werden Gartenfeste noch gemütlicher, wenn am Tag das Schirmdach Schatten spendet und am Abend das Grillfest nicht ins "Wasser fällt", wenn es regnet. So schafft das Schirmdach einen regengeschützten Schutzbereich, in dem bis zu 10 Personen an einer runden Tischplatte sitzen und individuell den in der Mitte der Tischplatte angeordneten runden Holzkohlegrill für die Zubereitung der Grillspeisen benutzen können.
Für die Qualm-und Rauchfreiheit im Sitzbereich sorgt ein über dem Holzkohlegrill befestigter höhenverstellbarer Rauchabzug. Dieser nimmt den Grillrauch in einer trichterförmigen Kaminhaube auf und leitet ihn über ein Rohrsystem durch das Schirmdach ab. Außerdem kann der Grill-Pavillon zu einem offenen Kamin umgerüstet werden, um somit bei kühlerem Wetter wohlige Wärme zu vermitteln.
Dabei kann nach dem Grillen der obere Grillrost vom runden Holzkohlegrill entfernt und die noch vorhandene Grillglut unter weiterer Zugabe von z.B. Kaminholz für ein offenes Kaminfeuer genutzt werden. Durch das Einhängen eines Markisenstoffes an den Enden der Dachträger läßt sich der Grill-Pavillon gegen äußere eindringende Kälte abschirmen. Die durch das Kaminfeuer erzeugte Wärme kann dann nicht nach außen entweichen.

Die Erfindung wird im Nachfolgenden anhand eines Ausführungsbeispiels und mit Bezug auf die beiliegenden Zeichnungen näher erläutert.
- **Fig.** 1: zeigt in Vorderansicht ein Beispiel für den Aufbau des erfindungsgemäßen Grill-Pavillon
- **Fig.** 2: zeigt den Grill-Pavillon in Draufsicht und im Halbschnitt
- **Fig.** 3: ist eine Ansicht aus Fig. 1 und zeigt in Perspektive die Aufnahme von zwei Dachblechen in einer C-Profillängsstrebe eines Dachträgers.
- **Fig.** 4: zeigt den Grill-Pavillon in Gesamtdarstellung eines Nutzungsbeispiels

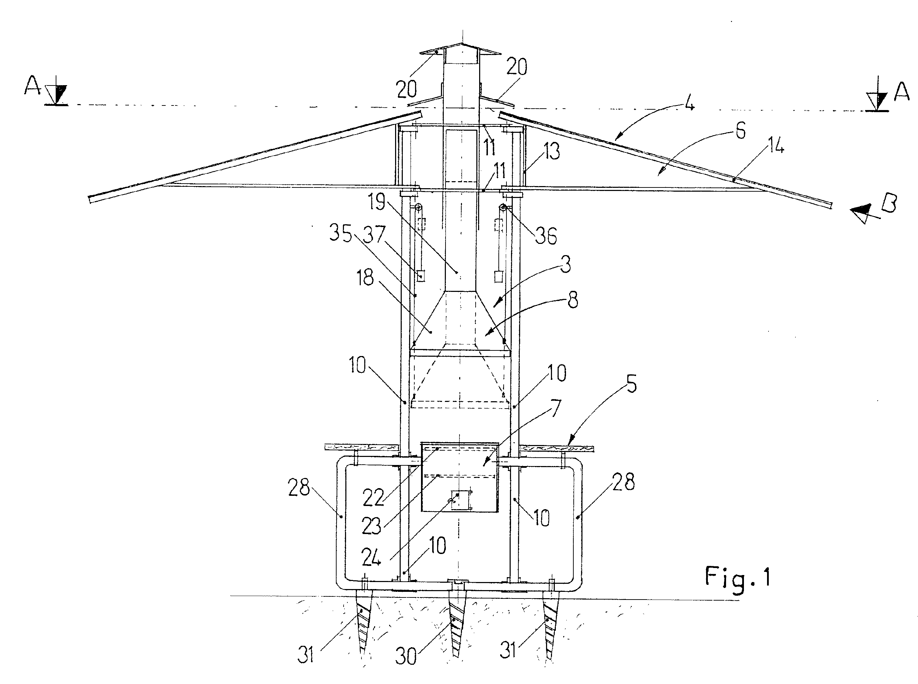

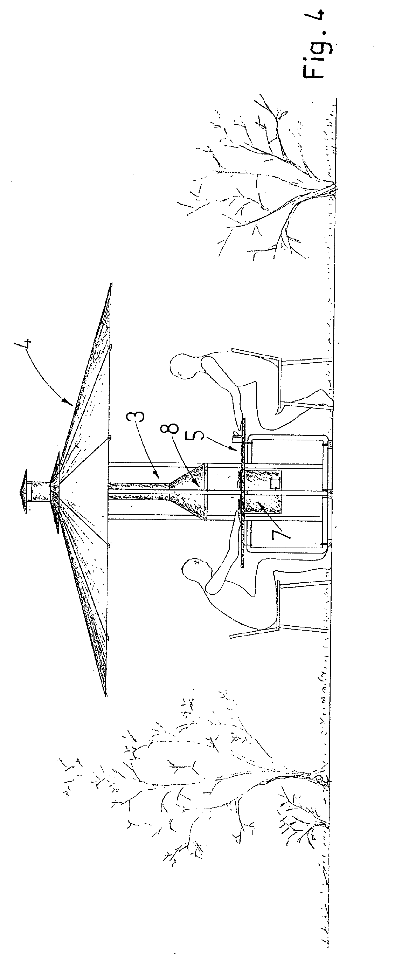

Wie aus der **Fig.** 1 und **Fig.** 4 hervorgeht, wird der Grill-Pavillon durch drei Hauptmerkmale gekennzeichnet:
- die Mittelsäule ***3*** als tragende Einheit
- das Schirmdach ***4*** als schützende Einheit
- die runde Tischplatte ***5*** mit dem Holzkohlegrill ***7*** und mit dem darüber angeordneten Rauchabzug ***8*** als benutzende Einheit

Weiter geht aus den **Fig.**1, 2 und 3 hervor, dass die Mittelsäule ***3*** aus mindestens drei Einzelstützen ***10,*** die im Dachbereich durch mindestens zwei Flanschringe ***11*,** welche auch für die Befestigung der Dachträger ***6*** dienen, verbunden sind.
Die von den drei Einzelstützen ***10*** der Mittelsäule ***3*** ausgehenden Rohrrahmenverzweigungen ***28*** dienen einerseits für die Auflage und Befestigung der kreisringförmigen Tischplatte ***5*** und für die zentrale Fixierung des Holzkohlegrills ***7*** und anderenseits für die Aufstellung und Befestigung des Grill-Pavillons.
Unter Verwendung von mindestens vier Bodenankern ***30,31*** kann der Grill-Pavillon auf allen üblichen Bodenarten, wie z.b.Rasen,-Beton,-Platten-oder Verbundsteinpflasterflächen aufgestellt werden.Die hierfür notwendige Standsicherheit wird durch die Befestigung der Rohrrahmenverzweigungen ***28*** mit den in den äusseren Rohrrahmenbereichen positionierten Bodenankern ***31*** und dem im Zentrum positionierten Bodenanker ***30*** erreicht.

Im Innenbereich der durch die mindestens drei Einzelstützen ***10*** gebildeten Mittelsäule ***3*** befindet sich in Höhe der runden Tischplatte ***5*** der topfförmige Holzkohlegrill ***7*.**
Dieser ist ausgestattet mit einem Grillrost ***22*** , einer Grillglutauflage ***23*** und einer Belüftungstür ***24***.

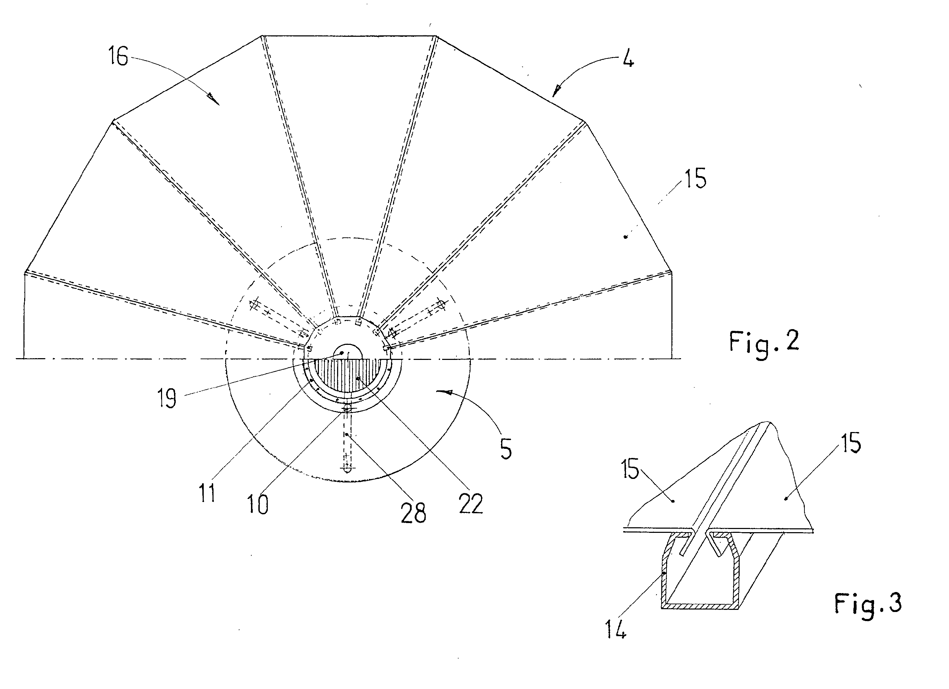

Über dem Holzkohlegrill **7** ist ein Rauchabzug ***8*** befestigt, der aus einer trichterförmigen Kaminhaube ***18***, dem durch das Schirmdach geführten Abzugsrohr ***19*** und den über dem Schirmdach angebrachten Wetterhauben ***20*** besteht.
Mittels drei Drahtseilen ***35***, drei Umlenkrollen ***36*** und drei Gegengewichten **37**, welche die Kaminhaube ***18*** mit den drei Einzelstützen ***10*** verbinden, kann die Höhe der Kaminhaube zum Grillgut bzw. zum Kaminfeuer individuell eingestellt werden. Das Dach ***4*** des Grill-Pavillons ist eine aus mindestens zwölf trapezförmigen Dachsegmenten ***16*** bestehende schirmartige Dachkonstruktion. In dieser sind mindestens zwölf Dachträgerelemente ***6*** und mindestens zwölf Dachbleche ***15*** vorgesehen.
Die keilförmig konstruierten Dachträgerelemente ***6*** sind mittels der U-förmig gestalteten Keilhöhenstreben ***13*** im Kreis umlaufend an den mindestens zwei Flanschringen ***11*** der Mittelsäule ***3*** befestigt.
Wie aus **Fig.**3 hervorgeht, sind die Dachträgerelemente ***6*** mit je einer C-Profillängsstrebe ***14*** ausgestatt. In deren oberen Öffnungsschlitz werden die trapezförmigen längsseits abgekanteten Dachbleche ***15*** eingeschoben.
Wegen der schirmartigen trapezförmigen Anordnung von Dachträgern ***6*** und Dachblechen ***15*** wird eine Verkeilung zwischen Blechabkantung der Dachbleche ***15*** mit den C-Profillängsstreben ***14*** der Dachträger ***6*** erreicht.

## Patentansprüche

1. Grill-Pavillon mit einer Mittelsäule ***(3)*** , mit einem pilzförmig an dieser Mittelsäule befestigten Schirmdach ***(4)*** und mit einer an der Mittelsäule befestigten runden Tischplatte ***(5)*** , **dadurch gekennzeichnet, dass** die Mittelsäule ***(3)*** aus mindestens drei Einzelstützen ***(10)*** besteht, die runde Tischplatte ***(5)*** die Mittelsäule kreisringförmig umgibt und im Innenraum der Mittelsäule ein runder Holzkohlegrill ***(7)*** und ein darüber angeordneter Rauchabzug ***(8)*** befestigt sind.

2. Grill-Pavillon gemäß Anspruch 1 **dadurch gekennzeichnet, dass** die mindestens drei Einzelstützen ***(10)*** der Mittelsäule ***(3)*** Rohre sind und diese zueinander in gleichen Abständen auf einem gedachten Kreisbogen von 525 mm Durchmesser angeordnet sind.

3. Grill-Pavillon gemäß Anspruch 1 und 2 **dadurch gekennzeichnet, dass** die mindestens drei Einzelstützen ***(10)*** der Mittelsäule ***(3)*** im Bereich der Dachbefestigung mit mindestens zwei Flanschringen ***(11)*** fixiert und befestigt sind.

4. Grill-Pavillon gemäß Anspruch 1 bis 3 **dadurch gekennzeichnet, dass** die mindestens drei Einzelstützen ***(10)*** der Mittelsäule ***(3)*** in mindestens drei nach aussen gerichteten U-förmigen Rohrrahmen ***(28)*** verzweigen, dadurch auf den oberen horizontal verlaufenden Rohrrahmenstreben die runde Tischplatte ***(5)*** befestigt werden kann und die unteren horizontal verlaufenden Rohrrahmenstreben auf die aussen positionierten mindestens drei Bodenanker ***(31)*** und dem in der Mitte positioniertem Bodenanker ***(30)*** aufgesetzt und befestigt werden können.

5. Grill-Pavillon gemäß Anspruch 1 **dadurch gekennzeichnet, dass** die Tischplatte ***(5)*** die Form eines Kreisringes hat mit einem runde Aussendurchmesser von 1.300 mm und mit einem runden Innenausschnitt von 570 mm.

6. Grill-Pavillon gemäß Anspruch 1 **dadurch gekennzeichnet, dass** das Dach ***(4)*** schirmförmig ist, eine Dachneigung von 15° hat und aus mindestens zwölf regelmäßigen trapezförmigen Dachsegmenten ***(16)*** mit mindestens zwölf Dachträgern ***(6)*** und mindestens zwölf Dachblechen ***(15)*** besteht.

7. Grill-Pavillon gemäß Anspruch 1 und 6 **dadurch gekennzeichnet, dass** die mindestens zwölf Dachträger ***(6)*** keilförmige Konstruktionen sind, die mit der Keilhöhenstrebe ***(13)*** an den mindestens zwei Flanschringen ***(11)*** befestigt sind und dass die Längsstreben ***(14)*** der Dachträger ***(6)*** C-Profile sind.

8. Grill-Pavillon gemäß Anspruch 6 **dadurch gekennzeichnet, dass** die mindestens zwölf Dachbleche ***(15)*** längsseitige Abkantungen von 15 mm lang und 120 ° haben und dadurch in die Öffnungsschlitze der C-Profillängsstreben ***(14)*** der Dachträger ***(6)*** eingeschoben werden können.
